# FASCICULE DE BREVET EUROPEEN

(11) **EP 3 314 867 B1**
(45) Date de publication et mention de la délivrance du brevet: **31.07.2019**
(21) Numéro de dépôt: 16739215.8
(22) Date de dépôt: 15.06.2016
(51) Int. Cl.: H04L 29/08, H04L 29/06, H04W 12/06, H04L 12/24

(54) **PARTAGE DE DONNÉES D'ÉVÉNEMENTS ENTRE PLUSIEURS PLATEFORMES DE SERVICE**
GEMEINSAME NUTZUNG VON EREIGNISDATEN ZWISCHEN MEHREREN DIENSTPLATTFORMEN
SHARING EVENT DATA BETWEEN SEVERAL SERVICE PLATFORMS

(30) Priorité: 23.06.2015 FR 1555774
(43) Date de publication de la demande: 02.05.2018
(73) Titulaire: Orange, 75015 Paris (FR)
(72) Inventeur: SUZANNE, Benoît, 92410 Ville d'Avray (FR); GALLOYER, Jérôme, 93450 L'ile Saint Denis (FR)
(74) Mandataire: Cabinet Plasseraud
(86) Numéro de dépôt international: PCT/FR2016/051435
(87) Numéro de publication internationale: WO 2016/207514

(56) Documents cités:
- US-A1- 2013 006 400
- US-A1- 2014 128 994
- US-A1- 2015 074 554

## Description

La présente invention concerne le traitement de données dans un réseau de télécommunications, et plus particulièrement le partage de données entre plateformes de service.

L'invention s'applique avantageusement aux plateformes de services dédiées à des entités électroniques d'utilisateurs telles que des objets connectés.

On entend par objet connecté tout objet apte à mettre en oeuvre des actions données et présentant en outre une interface de communication pour partager des informations sur un réseau. Aucune restriction n'est attachée à l'interface de communication considérée. Par la suite, l'exemple d'objets connectés à un réseau par une interface de type Wi-fi est considéré, à titre purement illustratif.

Aucune restriction n'est par ailleurs attachée aux actions mises en oeuvre par les objets connectés : un détecteur de mouvements détecte des mouvements, un capteur de température mesure la température d'une pièce dans laquelle il se situe, un capteur d'humidité peut mesurer l'humidité de l'air dans une pièce ou l'humidité de la terre dans un pot de fleur, etc. En outre, des informations peuvent être remontées à une interface réseau auquel accèdent les objets connectés, puis transmis à un serveur distant ou local, afin que l'utilisateur puisse les consulter.

Les constructeurs d'objets connectés mettent généralement à disposition des utilisateurs une plateforme de service accessible via un réseau tel que l'internet. En outre, une application dédiée à la plateforme de service peut être installée par l'utilisateur sur des terminaux de type Smartphone, tablette tactile, ordinateur de bureau ou portable, etc.

Ainsi, lorsque l'utilisateur acquiert une station météo connecté, il peut installer sur son terminal mobile une application du constructeur de la station météo pour accéder à un service en ligne via une première plateforme de service dédiée (appelée plateforme de service principale par la suite). Par exemple, il peut commander la station à distance, consulter les dernières mesures de la station météo, consulter un historique des mesures, recevoir des alertes, régler des préférences utilisateur (des seuils d'alerte par exemple), etc.

Généralement, un utilisateur possède une pluralité d'objets connectés, remplissant des fonctionnalités distinctes et parfois complémentaires.

Par exemple, en plus de la station météo, l'utilisateur peut posséder un capteur d'humidité connecté, placé dans la terre d'un pot de fleur, commercialisé par un autre constructeur et remontant des mesures d'humidité à une deuxième plateforme de service, distincte de la première plateforme de service.

D'autres objets connectés peuvent remonter des données à des plateformes de service respectivement dédiées à leurs constructeurs. Ces données sont par la suite appelées « données d'événements » et couvrent à la fois des mesures ponctuelles réalisées par un objet connecté (détection d'une ouverture de porte, mesure d'une température ponctuelle), des statistiques élaborées sur la base de mesures ponctuelles ou continues, ou encore des alertes indiquant qu'une grandeur mesurée dépasse (ou passe en dessous de) un certain seuil.

Pour consulter les données de l'un de ses objets, l'utilisateur doit ainsi lancer une application dédiée (ou accéder par un autre moyen à la plateforme de service dédiée). A cet effet, il peut avoir besoin de s'authentifier pour accéder aux données remontées par l'objet connecté.

La consultation des données remontées par plusieurs objets de différents constructeurs requiert donc plusieurs authentifications successives, avec potentiellement des identifiants et des mots de passe distincts.

En outre, il serait souhaitable de pouvoir regrouper les données issues d'objets de constructeurs différents au sein d'une unique interface accessible par l'utilisateur, d'une part pour faciliter l'accès à l'ensemble des données, et d'autre part parce que certaines données peuvent avoir un lien entre elles, ce lien pouvant être exploité. Par exemple, à partir des informations d'humidité du capteur d'humidité, et des données de la station météo, il est possible de prévoir l'évolution de l'humidité sur les prochains jours, ce qui est une information pertinente pour l'utilisateur.

Il existe ainsi un besoin de simplifier l'identification/authentification de l'utilisateur d'objets connectés à une plateforme de service tout en permettant le partage de données issues d'objets connectés de constructeurs différents.

Le document US2014/128994 divulgue un serveur LSS agissant en tant que plateforme intelligente entre des capteurs, des dispositifs et d'autres systems.

La présente invention vient améliorer cette situation.

Elle propose à cet effet un procédé d'enregistrement d'une première entité électronique d'un utilisateur, la première entité électronique étant apte à générer des données d'événements, le procédé comprenant :
- suite à la réception d'une première requête d'enregistrement par une première plateforme de service principale dédiée à la première entité électronique, ladite première requête d'enregistrement étant issue d'un terminal utilisateur et comprenant un identifiant utilisateur destiné à l'identification/authentification de l'utilisateur auprès d'une plateforme de service secondaire, réception par la plateforme de service secondaire depuis la première plateforme de service principale d'une deuxième requête d'enregistrement, la deuxième requête comprenant l'identifiant utilisateur ;
- sur identification/authentification positive de l'utilisateur auprès de la plateforme de service secondaire, enregistrement de la première entité électronique dans une base de données de la plateforme de service secondaire, en association avec un compte de l'utilisateur, au moins une deuxième entité électronique dédiée à une deuxième plateforme de service principale ayant été enregistrée au préalable en association avec le compte de l'utilisateur ;
- sur réception par la plateforme de service secondaire, de données d'événements issues de la première entité électronique, mettre à disposition lesdites données d'événements auprès de la deuxième plateforme de service principale.

Ainsi, non seulement l'enregistrement d'entités électroniques issues de différents constructeurs (associées à différentes plateformes de service principales) est simplifiée par l'utilisation d'un unique identifiant utilisateur, mais la présente invention permet en outre le partage de données d'événements issues de ces différentes entités électroniques.

Selon un mode de réalisation de l'invention, la mise à disposition des données d'événements peut comprendre la transmission desdites données d'événements à la deuxième plateforme de service principale.

La deuxième plateforme de service principale (et les autres plateformes de services principales si il y en a) sont ainsi informées en temps réel des nouvelles données d'événements publiées. Ces données d'événements peuvent ensuite être exploitées par la deuxième plateforme de service principale, pour enrichir les données d'événements d'entités électroniques qu'elle gère par exemple (les données d'événements de la deuxième entité électronique).

Selon une réalisation de l'invention, dans lequel la mise à disposition des données d'événements (sur inscription et acceptation de l'utilisateur) comprend l'envoi à la deuxième plateforme de service principale d'une notification indiquant que de nouvelles données d'événements de l'utilisateur sont accessibles sur la plateforme de service secondaire.

Ainsi, la consultation des données d'événements peut être différée, ce qui évite des transmissions inutiles dans le cas où la deuxième plateforme de service principale n'a pas besoin de consulter les données d'événements.

Dans un mode de réalisation de l'invention, le procédé comprend en outre l'étape suivante :
- sur réception de la deuxième requête d'enregistrement, la plateforme de service secondaire requiert la définition d'au moins une règle de confidentialité à associer à la première entité électronique, la règle de confidentialité étant enregistrée en association avec la première entité électronique dans la plateforme de service secondaire ;
- sur réception des données d'événements issues de la première entité électronique, filtrage par la plateforme de service secondaire des données d'événements sur la base des règles de confidentialité associées à la première entité électronique, et mise à disposition des données d'événements filtrées auprès de la deuxième plateforme de service principale.

Ainsi, le partage des données peut être délimité par des règles de confidentialité. Ces règles peuvent être définies par l'utilisateur ou par la première plateforme de service principale.

Selon un mode de réalisation de l'invention, sur réception par la plateforme de service secondaire, de données d'événements issues de la deuxième entité électronique, le procédé peut comprendre en outre la mise à disposition des données d'événements auprès de la première plateforme de service principale.

Ainsi, le partage des données s'applique à l'ensemble des plateformes de service principales qui souhaitent collaborer avec la plateforme de service secondaire. Les données d'événements issues de différentes entités électroniques permettent donc un enrichissement mutuel de l'ensemble des plateformes de service principales.

En complément, le procédé peut comprendre en outre les étapes suivantes :
- sur réception de la deuxième requête d'enregistrement, la plateforme de service secondaire requiert la définition d'une première règle de filtrage à associer à la première entité électronique, la première règle de filtrage étant enregistrée en association avec la première entité électronique dans la plateforme de service secondaire ; et
- sur réception des données d'événements issues de la deuxième entité électronique, filtrage par la plateforme de service secondaire des données d'événements sur la base de la première règle de filtrage associée à la première entité électronique, et mise à disposition des données d'événements filtrées auprès de la première plateforme de service principale.

Ainsi, ce mode de réalisation permet de limiter les transmissions dans le réseau de télécommunications en évitant des mises à disposition de données d'événements non souhaitées par les plateformes de service principales.

Selon un mode de réalisation, la deuxième entité électronique peut être enregistrée dans la plateforme de service principale en association avec au moins une deuxième règle de filtrage pour filtrer les données à transmettre à la deuxième plateforme de service principale, et les données d'événements issues de la première entité électronique peuvent être filtrées sur la base de la deuxième règle de filtrage avant d'être mises à disposition de la deuxième plateforme de service principale.

Ce mode de réalisation permet également de limiter les transmissions dans le réseau de télécommunications.

Dans un mode de réalisation de l'invention, la plateforme de service secondaire peut stocker des informations utilisateurs en association avec le compte de l'utilisateur et, sur identification/authentification positive de l'utilisateur auprès de la plateforme de service secondaire, la plateforme de service secondaire peut transmettre à la première plateforme de service principale les informations utilisateur.

Ainsi, la première plateforme de service principale dispose d'informations permettant la création d'un compte utilisateur, de manière transparente pour l'utilisateur qui n'a à saisir aucune information.

Un deuxième aspect de l'invention concerne un produit programme informatique comportant des instructions pour la mise en oeuvre du procédé selon le premier aspect de l'invention, lorsque ce programme est exécuté par un processeur.

Un troisième aspect de l'invention concerne une plateforme de service secondaire pour l'enregistrement d'une première entité électronique d'un utilisateur, comprenant :
- une interface de réception pour recevoir, suite à la réception d'une première requête d'enregistrement auprès d'une première plateforme de service principale dédiée à la première entité électronique, la première requête d'enregistrement étant issue d'un terminal utilisateur et comprenant un identifiant utilisateur destiné à l'identification/authentification de l'utilisateur auprès de la plateforme de service secondaire, une deuxième requête d'enregistrement depuis la première plateforme de service, la deuxième requête comprenant l'identifiant utilisateur ;
- un processeur configuré pour, sur identification/authentification positive de l'utilisateur auprès de la plateforme de service secondaire, enregistrer la première entité électronique dans une base de données de la plateforme de service secondaire, en association avec un compte de l'utilisateur, au moins une deuxième entité électronique dédiée à une deuxième plateforme de service principale ayant été enregistrée au préalable en association avec le compte de l'utilisateur.
L'interface de réception est en outre apte à recevoir des données d'événements issues de la première entité électronique et le processeur est apte à mettre à disposition les données d'événements auprès de la deuxième plateforme de service principale.

Un quatrième aspect de l'invention concerne un système comprenant une plateforme de service secondaire selon le troisième aspect de l'invention, une première plateforme de service principale et une deuxième plateforme de service principale.

D'autres caractéristiques et avantages de l'invention apparaîtront à l'examen de la description détaillée ci-après, et des dessins annexés sur lesquels:
- la figure 1 illustre un système selon un mode de réalisation de l'invention ;
- la figure 2 est un diagramme illustrant les étapes d'un procédé selon un mode de réalisation de l'invention ;
- la figure 3 représente une plateforme de service secondaire selon un mode de réalisation de l'invention.

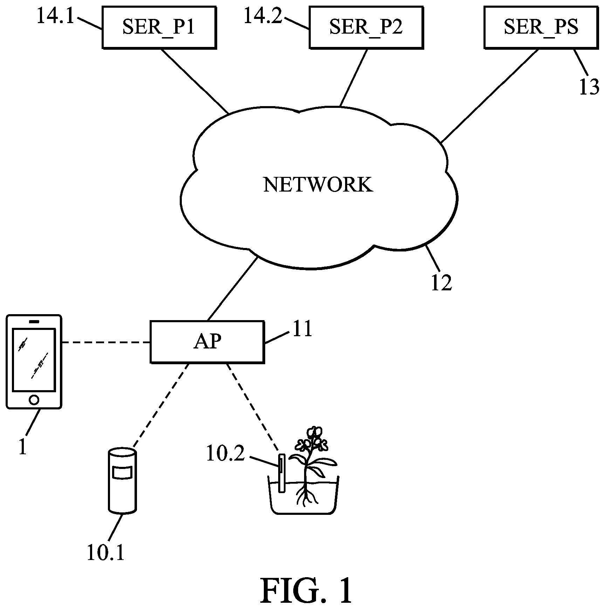

La **figure 1** illustre un système selon un mode de réalisation de l'invention.

Le système comprend un terminal 1 de l'utilisateur, une première entité électronique 10.1 et une deuxième entité électronique 10.2, pouvant tous les trois accéder à un réseau 12, tel que le réseau internet, via un point d'accès 11. Bien que l'accès via un unique point d'accès 12 ait été représenté en référence à la figure 1, plusieurs points d'accès séparés peuvent être prévus. Par exemple, selon une variante, le terminal mobile peut accéder au réseau 12 via une station de base d'un réseau mobile tandis que les entités électroniques accèdent au réseau 12 via une borne Wi-fi.

Le terminal 1 couvre tout dispositif électronique par lequel un utilisateur peut accéder au point d'accès 11, via une liaison filaire (Ethernet par exemple) ou sans fil (Wi-fi par exemple) et possédant optionnellement une interface utilisateur. A cet effet, le terminal mobile 1 peut englober un téléphone portable (un téléphone intelligent par exemple), une tablette tactile, un ordinateur portable ou de bureau, etc et accéder au réseau 12 directement ou indirectement.

Dans ce qui suit, on considère la première entité électronique 10.1 comme étant une station météo connectée de l'utilisateur du terminal 1. La première entité électronique peut ainsi acquérir des mesures de température et/ou hygrométriques ou détecter des franchissements de seuils prédéfinis ou réglables par l'utilisateur. Ainsi, la première entité électronique 10.1 peut plus généralement obtenir des données d'événements, ces données d'événements pouvant être remontées via le point d'accès 11 et le réseau 12 à une première plateforme de service principale 14.1. La première plateforme de service principale 14.1 peut appartenir à un constructeur d'objets connectés, dont fait partie la première entité électronique 10.1. La première plateforme de service principale 14.1 peut en outre, comme il est bien connu, être accessible via une première application dédiée installée sur le terminal 1 de l'utilisateur. Via cette première application dédiée, l'utilisateur peut accéder à l'ensemble de ses objets connectés qui sont gérés par le constructeur de la première entité électronique 10.1.

La deuxième entité électronique 10.2 peut être un capteur d'humidité destiné à être placé dans un pot de fleur de l'utilisateur. Ainsi, des mesures d'humidité ou des alertes (ou toute autre donnée d'événement) peut être remontée à une deuxième plateforme de service principale 14.2 via le point d'accès 11 et le réseau 12. La deuxième plateforme de service principale 14.2 peut appartenir à un constructeur d'objets connectés, dont fait partie la deuxième entité électronique 10.2. La deuxième plateforme de service principale 14.2 peut en outre, comme il est bien connu, être accessible via une deuxième application dédiée installée sur le terminal 1 de l'utilisateur. Via cette deuxième application dédiée, l'utilisateur peut accéder à l'ensemble de ses objets connectés qui sont gérés par le constructeur de la première entité électronique 10.1.

Ainsi, on entend par plateforme de service principale toute plateforme de service dédiée à un sous-groupe d'entités électroniques uniquement, typiquement à des entités électroniques provenant du même constructeur.

L'utilisateur peut donc, classiquement, accéder aux données d'événements remontées respectivement par les première et deuxième entités électroniques via des applications distinctes installées sur le terminal 1. Pour cela, les entités électroniques sont généralement enregistrées au préalable par l'utilisateur auprès de leurs plateformes de service respectives.

A cet effet, lors d'étapes initiales, l'utilisateur peut installer la première application dédiée sur son terminal 1 afin d'accéder à la première plateforme de service 14.1 en vue d'enregistrer la première entité électronique 14.1. Il en va de même lors de l'initialisation de la deuxième entité électronique 14.2. Comme détaillé dans ce qui suit, les étapes d'enregistrement des entités électroniques sont simplifiées et permettent le partage de données entre entités électroniques issues de différents constructeurs.

A cet effet, le système illustré sur la figure 1 comprend en outre un serveur secondaire 13, accessible via le réseau 12 et dont les fonctionnalités sont décrites ci-après.

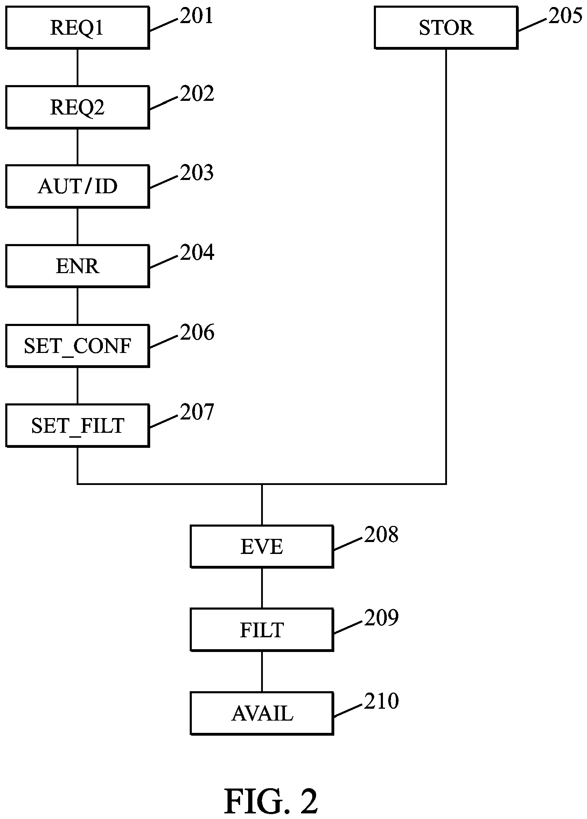

La **figure 2** est un diagramme illustrant les étapes d'un procédé selon un mode de réalisation de l'invention.

A une étape 201, la première plateforme de service principale 14.1 reçoit une première requête d'enregistrement en vue d'enregistrer la première entité électronique 10.1 depuis le terminal 1. Par exemple, l'utilisateur vient d'acquérir la première entité électronique 10.1, a installé une application permettant d'accéder à la première plateforme de service principale 14.1 (ou en variante accède à la première plateforme de service principale 14.1 via une page internet) et accède à une section permettant l'enregistrement d'entités électroniques du constructeur gérant la première plateforme de service principale 14.1.

Selon l'invention, la première plateforme de service principale 14.1 peut proposer à l'utilisateur de procéder à l'enregistrement de la première entité électronique 10.1 via la plateforme de service secondaire 13. A cet effet, une fenêtre en incrustation peut être affichée sur la page, proposant à l'utilisateur d'entrer un identifiant utilisateur permettant son identification/authentification auprès de la plateforme de service secondaire 13. Par exemple, la plateforme de service secondaire 13 peut être une plateforme de réseau social sur lequel l'utilisateur possède déjà un compte et un identifiant utilisateur associé. En variante, la plateforme de service secondaire 13 peut être une plateforme de service d'un opérateur téléphonique auprès duquel un utilisateur peut être identifié par un numéro de téléphone ou tout autre identifiant utilisateur.

La première requête d'enregistrement comprend ainsi un identifiant utilisateur destiné à identifier/authentifier l'utilisateur auprès de la plateforme de service secondaire 13.

Sur réception de la première requête d'enregistrement, la première plateforme de service principale 14.1 transmet à une étape 202 une deuxième requête d'enregistrement à la plateforme de service secondaire 13, la deuxième requête d'enregistrement comprenant l'identifiant utilisateur contenu dans la première requête d'enregistrement.

A une étape 203, la plateforme de service secondaire 13 identifie/authentifie l'utilisateur au moyen de l'identifiant utilisateur contenu dans la deuxième requête d'enregistrement. Lorsque l'identifiant utilisateur est un identifiant de type login, et dans le cadre d'une authentification, la plateforme de service secondaire 13 peut en outre requérir de l'utilisateur un mot de passe. A cet effet, une fenêtre comprenant un champ pour insérer un mot de passe peut être affiché sur le terminal 1.

Sur identification/authentification positive de l'utilisateur à l'étape 203, la plateforme de service secondaire procède, à l'étape 204, à l'enregistrement de la première entité électronique 10.1 dans une base de données interne, en association avec un compte de l'utilisateur (compte de réseau social lorsque la plateforme de service secondaire 13 est une plateforme de réseau social, compte client lorsque la plateforme de service secondaire 13 est une plateforme d'un opérateur téléphonique, ou OTT (Over the Top)).

Dans le cadre de l'invention, la deuxième entité électronique 10.2 a fait l'objet d'un enregistrement préalable auprès de la plateforme de service secondaire 13 à une étape 205. A cet effet, des étapes correspondant aux étapes 201 à 204 ont pu être mises en oeuvre par la deuxième plateforme de service principale 14.2 et la plateforme de service secondaire 13.

Selon un mode de réalisation complémentaire de l'invention, la plateforme de service secondaire 13 peut requérir la définition, suite à l'étape 202, d'au moins une règle de confidentialité à associer à la première entité électronique 10.1.

A cet effet, une fenêtre peut être affichée sur le terminal 1 afin que l'utilisateur sélectionne une règle (en cochant une ou plusieurs cases) parmi un ensemble de règles proposées. En variante, la règle de confidentialité peut être définie par la première plateforme de service principale 14.1, de manière transparente pour l'utilisateur.

On appelle règle de confidentialité toute règle restreignant le partage des données d'événements issues de la première entité électronique 10.1. Par exemple, il peut être choisi quelles plateformes de service principales autre que la première plateforme de service principale 14.1 sont autorisées à recevoir les données d'événements issues de la première entité électronique 10.1. Bien entendu, la règle de confidentialité peut être qu'aucune restriction n'est attachée au partage des données d'événements issues de la première entité électronique 10.1.

La règle de confidentialité ainsi définie est alors enregistrée à une étape 206 en association avec la première entité électronique 10.1 dans la plateforme de service secondaire 13.

L'application de telles règles de confidentialité sera décrite dans ce qui suit.

En outre, de manière alternative ou complémentaire, la plateforme de service secondaire 13 peut requérir la définition, suite à l'étape 202, d'au moins une règle de filtrage à associer à la première entité électronique. L'expression « règle de filtrage » couvre toute règle restreignant ou désignant les données d'événement issues d'entités électroniques autres que la première entité électronique 10.1, qui sont mises à disposition de la première plateforme de service 14.1. Par la définition de règles de filtrage, la première plateforme de service 14.1 peut ainsi indiquer les données d'événements qu'elle souhaite recevoir et/ou les données d'événement qu'elle ne souhaite pas recevoir . Par exemple, dans l'exemple où la première entité électronique 10.1 est une station météo, les données d'événements issues d'une cafetière connectée ne présentent pas grand intérêt pour la première plateforme de service principale 14.1. L'utilisateur ou la plateforme de service principale 14.1 peut ainsi choisir de ne pas recevoir de telles données d'événements, par la définition d'une règle de filtrage. En variante, la règle de filtrage peut consister à choisir la fréquence à laquelle des données d'événements sont mises à disposition de la première plateforme de service principale 14.1.

La règle de filtrage ainsi définie est alors enregistrée à une étape 207 en association avec la première entité électronique 10.1 dans la plateforme de service secondaire 13.

Comme décrit ci-dessus, les règles de confidentialité et les règles de filtrage peuvent être définies dès l'enregistrement de la première entité électronique 10.1. En outre, l'invention prévoit que de telles règles peuvent être reconfigurées à des étapes ultérieures. Par exemple, l'utilisateur peut ultérieurement s'identifier/authentifier auprès de la plateforme de service secondaire afin de modifier ou supprimer les règles existantes ou afin de créer de nouvelles règles.

En parallèle, l'utilisateur peut également avoir défini lors de l'étape 205 des règles de confidentialité et des règles de filtrage à associer à la deuxième entité électronique.

Suite à l'enregistrement d'au moins deux entités électroniques dans la plateforme de service secondaire 13, ces deux entités électroniques ayant des plateformes de service principales distinctes, le procédé selon l'invention permet le partage des données d'événement issues de ces entités électroniques.

A cet effet, des données d'événements peuvent être remontée par la première entité électronique à une étape 208. Par exemple, les données d'événements peuvent indiquer la prévision du franchissement d'un seuil de température lors sur une période donnée. Les données d'événements sont transmises par la première plateforme de service principale 14.1 à la plateforme de service secondaire 13.

A une étape optionnelle 209, les données d'événements reçues par la plateforme de service secondaire 13 sont filtrées par les règles de confidentialité associées à la première entité électronique ayant remonté les données et par les règles de filtrage associées aux autres entités électroniques (la deuxième entité électronique 10.2) dans la base de données de la plateforme de service secondaire 14.2. Par exemple, les données d'événements ne sont pas mises à disposition de la deuxième plateforme de service 14.2 si la deuxième entité électronique 10.2 est associée à une règle de filtrage consistant à ne pas recevoir de données météorologiques.

Les données d'événement issues de la première entité électronique 10.1, et éventuellement filtrées, sont ensuite mises à disposition auprès des plateformes de service autres que la première plateforme de service 10.1. Ainsi, si aucune règle de filtrage ou de confidentialité n'empêche une telle mise à disposition, les données d'événements issues de la première entité électronique (données météorologiques) sont mises à disposition de la deuxième plateforme de service principale 14.2 à une étape 210 (et à disposition de toute autre plateforme de service principale s'il y en a et si les règles de confidentialité et de filtrage le permettent).

L'expression « mise à disposition » peut couvrir la transmission des données d'événements à la deuxième plateforme de service principale 14.2, ou encore l'envoi à la deuxième plateforme de service principale 14.2 d'une notification indiquant que de nouvelles données d'événements de l'utilisateur sont accessibles sur la plateforme de service secondaire 13. Dans ce cas, la deuxième plateforme de service principale 14.2 peut accéder au compte de l'utilisateur afin de récupérer l'ensemble des données d'événements (sous réserve des règles de filtrage et de confidentialité) associées à des entités électroniques d'autres plateformes de service principales.

Ainsi, la présente invention permet avantageusement de faciliter les enregistrements des entités électroniques de l'utilisateur, quelle que soit la plateforme de service principale associée, au moyen d'un identifiant unique, tout en permettant le partage des données d'événements. La confidentialité peut en outre être assurée par la définition de règles.

De manière symétrique, les données d'événements remontées à la plateforme de service secondaire 13 peuvent provenir de la deuxième entité électronique 10.2. Dans ce cas, elles peuvent être filtrées par des règles de confidentialité associées à la deuxième entité électronique 10.2 et par des règles de filtrage éventuellement associées à la première entité électronique 10.1 avant d'être mises à disposition de la première entité électronique 10.1.

En outre, comme détaillé ci-dessus, la plateforme de service secondaire 13 peut être une plateforme de réseau social ou une plateforme d'opérateur téléphonique, sur laquelle l'utilisateur a un compte utilisateur. Un tel compte utilisateur peut être associé avec des informations utilisateurs, telles que l'adresse, le nom, le numéro de téléphone, l'adresse mail, un pseudonyme de l'utilisateur. Ainsi, suite à l'enregistrement de la première entité électronique 10.1 à l'étape 204, la plateforme de service secondaire 13 peut transmettre des informations utilisateurs à la première plateforme de service principale 14.1. Ces données peuvent être exploitées par la première plateforme de service principale 14.1 afin de créer un compte utilisateur dans une base de données locale à la première plateforme de service principale 14.1. Avant de communiquer ces données d'utilisateurs, l'utilisateur peut définir les données qu'ils souhaitent que la plateforme de service secondaire 13 communique à la première plateforme de service principale 14.1.

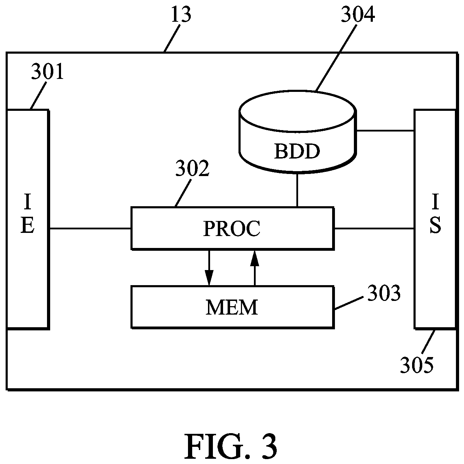

La **figure 3** représente une plateforme de service secondaire 13 selon un mode de réalisation de l'invention.

La plateforme de service secondaire 13 comprend une mémoire vive 303 et un processeur 302 pour stocker des instructions permettant la mise en oeuvre d'étapes des étapes 202 à 210 du procédé décrit ci-avant. La plateforme de service secondaire 13 comporte aussi une base de données 304 pour le stockage de données destinées à être conservées après l'application du procédé, notamment les données des comptes utilisateurs, comprenant les différentes entités électroniques, éventuellement en association avec des règles de filtrage et/ou des règles de confidentialité. Les données d'un compte utilisateur peuvent également comprendre des informations d'utilisateurs (adresse, nom, prénom, date de naissance, etc) notamment lorsque la plateforme de service secondaire 13 est une plateforme de réseau social ou une plateforme d'opérateur téléphonique. Les données d'événements peuvent également être stockées dans la base de données 304. La plateforme de service secondaire 13 comporte en outre une interface d'entrée 301 destinée à recevoir les données d'événement, les définitions de règles de confidentialité et de filtrage, les requêtes d'enregistrement des entités, et une interface de sortie 305 destinée à mettre à disposition les données d'événements auprès des plateformes de service principales et optionnellement destinée à transmettre des informations utilisateurs aux plateformes de service principales.

La présente invention ne se limite pas aux formes de réalisation décrites ci-avant à titre d'exemples ; elle s'étend à d'autres variantes.

De plus, les exemples donnés impliquent deux entités connectées et deux plateformes de service principales. Une telle architecture est donnée à titre illustratif uniquement et ne saurait restreindre l'invention à ce seul exemple.

## Revendications

1. Procédé d'enregistrement d'une première entité électronique (10.1) d'un utilisateur, la première entité électronique étant apte à générer des données d'événements, le procédé comprenant :
- suite à la réception (201) d'une première requête d'enregistrement de la dite première entité électronique par une première plateforme de service principale (14.1) dédiée à la première entité électronique, ladite première requête d'enregistrement étant issue d'un terminal utilisateur (1) et comprenant un identifiant utilisateur destiné à l'identification/authentification de l'utilisateur auprès d'une plateforme de service secondaire (13), réception (202) par la plateforme de service secondaire depuis la première plateforme de service principale d'une deuxième requête d'enregistrement de la dite première entité électronique, la deuxième requête comprenant l'identifiant utilisateur ;
- sur identification/authentification (203) positive de l'utilisateur auprès de la plateforme de service secondaire, enregistrement (204) de la première entité électronique dans une base de données de la plateforme de service secondaire, en association avec un compte de l'utilisateur, au moins une deuxième entité électronique (10.2) dédiée à une deuxième plateforme de service principale (14.2) ayant été enregistrée (205) au préalable en association avec le compte de l'utilisateur ;
- sur réception (208) par la plateforme de service secondaire, de données d'événements issues de la première entité électronique, mettre à disposition (210) lesdites données d'événements auprès de la deuxième plateforme de service principale.

2. Procédé selon la revendication 1, dans lequel la mise à disposition (210) des données d'événements comprend la transmission desdites données d'événements à la deuxième plateforme de service principale.

3. Procédé selon la revendication 1, dans lequel la mise à disposition (210) des données d'événements comprend l'envoi à la deuxième plateforme de service principale (14.2) d'une notification indiquant que de nouvelles données d'événements de l'utilisateur sont accessibles sur la plateforme de service secondaire (13).

4. Procédé selon l'une des revendications précédentes, dans lequel, le procédé comprend en outre l'étape suivante :
- sur réception (202) de la deuxième requête d'enregistrement, la plateforme de service secondaire (13) requiert la définition d'au moins une règle de confidentialité à associer à la première entité électronique (10.1), la règle de confidentialité étant enregistrée en association avec la première entité électronique dans la plateforme de service secondaire ;
- sur réception (208) des données d'événements issues de la première entité électronique, filtrage (209) par la plateforme de service secondaire desdites données d'événements sur la base des règles de confidentialité associées à la première entité électronique, et mise à disposition des données d'événements filtrées auprès de la deuxième plateforme de service principale (14.2).

5. Procédé selon l'une des revendications précédentes, dans lequel, sur réception par la plateforme de service secondaire (13), de données d'événements issues de la deuxième entité électronique (10.2), le procédé comprend en outre la mise à disposition desdites données d'événements auprès de la première plateforme de service principale (14.1).

6. Procédé selon la revendication 5, dans lequel, le procédé comprend en outre les étapes suivantes :
- sur réception (202) de la deuxième requête d'enregistrement, la plateforme de service secondaire (13) requiert la définition d'une première règle de filtrage à associer à la première entité électronique, la première règle de filtrage étant enregistrée en association avec la première entité électronique dans la plateforme de service secondaire ; et
- sur réception (208) des données d'événements issues de la deuxième entité électronique, filtrage (209) par la plateforme de service secondaire desdites données d'événements sur la base de la première règle de filtrage associée à la première entité électronique, et mise à disposition (210) des données d'événements filtrées auprès de la première plateforme de service principale.

7. Procédé selon l'une des revendications précédentes, dans lequel la deuxième entité électronique (10.2) est enregistrée (205) dans la plateforme de service principale en association avec au moins une deuxième règle de filtrage pour filtrer les données à transmettre à la deuxième plateforme de service principale (14.2), et dans lequel les données d'événements issues de la première entité électronique sont filtrées sur la base de la deuxième règle de filtrage avant d'être mises à disposition de la deuxième plateforme de service principale.

8. Procédé selon l'une des revendications précédentes, dans lequel la plateforme de service secondaire (13) stocke des informations utilisateurs en association avec le compte de l'utilisateur et dans lequel, sur identification/authentification (203) positive de l'utilisateur auprès de la plateforme de service secondaire, la plateforme de service secondaire transmet à la première plateforme de service principale les informations utilisateurs.

9. Produit programme informatique comportant des instructions pour la mise en oeuvre du procédé selon l'une des revendications 1 à 8, lorsque ce programme est exécuté par un processeur.

10. Plateforme de service secondaire pour l'enregistrement d'une première entité électronique (10.1) d'un utilisateur, comprenant :
- une interface de réception (301) pour recevoir, suite à la réception d'une première requête d'enregistrement auprès d'une première plateforme de service principale (14.1) dédiée à la première entité électronique, ladite première requête d'enregistrement étant issue d'un terminal utilisateur (1) et comprenant un identifiant utilisateur destiné à l'identification/authentification de l'utilisateur auprès de la plateforme de service secondaire, une deuxième requête d'enregistrement depuis la première plateforme de service, la deuxième requête comprenant l'identifiant utilisateur ;
- un processeur (302) configuré pour, sur identification/authentification positive de l'utilisateur auprès de la plateforme de service secondaire, enregistrer la première entité électronique dans une base de données (304) de la plateforme de service secondaire, en association avec un compte de l'utilisateur, au moins une deuxième entité électronique dédiée à une deuxième plateforme de service principale ayant été enregistrée au préalable en association avec le compte de l'utilisateur ; dans laquelle l'interface de réception est en outre apte à recevoir des données d'événements issues de la première entité électronique et le processeur est apte à mettre à disposition lesdites données d'événements auprès de la deuxième plateforme de service principale.

11. Système comprenant une plateforme de service secondaire (13) selon la revendication 10, une première plateforme de service principale (14.1) et une deuxième plateforme de service principale (14.2).

## Patentansprüche

1. Verfahren zur Registrierung einer ersten elektronischen Einheit (10.1) eines Benutzers, wobei die erste elektronische Einheit geeignet ist, Ereignisdaten zu erzeugen, das Verfahren umfassend:
- nach dem Empfang (201) einer ersten Anforderung zur Registrierung der ersten elektronischen Einheit durch eine erste Hauptdienstplattform (14.1), die speziell für die erste elektronische Einheit vorgesehen ist, wobei die erste Anforderung zur Registrierung von einem Benutzerendgerät (1) stammt und eine Benutzerkennung umfasst, die für die Identifizierung/Authentifizierung des Benutzers bei einer Sekundärdienstplattform (13) bestimmt ist, Empfangen (202), durch die Sekundärdienstplattform, einer zweiten Anforderung zur Registrierung der ersten elektronischen Einheit von der ersten Hauptdienstplattform, wobei die zweite Anforderung die Benutzerkennung umfasst;
- bei positiver Identifizierung/Authentifizierung (203) des Benutzers bei der Sekundärdienstplattform, Registrieren (204) der ersten elektronischen Einheit in einer Datenbank der Sekundärdienstplattform in Verbindung mit einem Konto des Benutzers, wobei mindestens eine zweite elektronische Einheit (10.2), die speziell für eine zweite Hauptdienstplattform (14.2) vorgesehen ist, zuvor in Verbindung mit dem Konto des Benutzers registriert (205) wurde;
- bei Empfang (208) von Ereignisdaten, die von der ersten elektronischen Einheit stammen, durch die Sekundärdienstplattform, Bereitstellen (210) der Ereignisdaten an die zweite Hauptdienstplattform.

2. Verfahren nach Anspruch 1, wobei das Bereitstellen (210) der Ereignisdaten das Übertragen der Ereignisdaten an die zweite Hauptdienstplattform umfasst.

3. Verfahren nach Anspruch 1, wobei das Bereitstellen (210) der Ereignisdaten das Senden einer Benachrichtigung an die zweite Hauptdienstplattform (14.2) umfasst, die angibt, dass neue Ereignisdaten des Benutzers auf der Sekundärdienstplattform (13) abrufbar sind.

4. Verfahren nach einem der vorhergehenden Ansprüche, wobei das Verfahren ferner den folgenden Schritt umfasst:
- bei Empfang (202) der zweiten Anforderung zur Registrierung fordert die Sekundärdienstplattform (13) die Definition mindestens einer Vertraulichkeitsregel, die mit der ersten elektronischen Einheit (10.1) in Verbindung zu bringen ist, wobei die Vertraulichkeitsregel in Verbindung mit der ersten elektronischen Einheit in der Sekundärdienstplattform registriert wird;
- bei Empfang (208) der Ereignisdaten, die von der ersten elektronischen Einheit stammen, Filtern (209) der Ereignisdaten durch die Sekundärdienstplattform auf der Grundlage der Vertraulichkeitsregeln, die mit der ersten elektronischen Einheit in Verbindung stehen, und Bereitstellen der gefilterten Ereignisdaten an die zweite Hauptdienstplattform (14.2).

5. Verfahren nach einem der vorhergehenden Ansprüche, wobei bei Empfang von Ereignisdaten, die von der zweiten elektronischen Einheit (10.2) stammen, durch die Sekundärdienstplattform (13) das Verfahren ferner das Bereitstellen der Ereignisdaten an die erste Hauptdienstplattform (14.1) umfasst.

6. Verfahren nach Anspruch 5, wobei das Verfahren ferner die folgenden Schritte umfasst:
- bei Empfang (202) der zweiten Anforderung zur Registrierung fordert die Sekundärdienstplattform (13) die Definition einer ersten Filterregel, die mit der ersten elektronischen Einheit in Verbindung zu bringen ist, wobei die erste Filterregel in Verbindung mit der ersten elektronischen Einheit in der Sekundärdienstplattform registriert wird; und
- bei Empfang (208) der Ereignisdaten, die von der zweiten elektronischen Einheit stammen, Filtern (209) der Ereignisdaten durch die Sekundärdienstplattform auf der Grundlage der ersten Filterregel, die mit der ersten elektronischen Einheit in Verbindung steht, und Bereitstellen (210) der gefilterten Ereignisdaten an die erste Hauptdienstplattform.

7. Verfahren nach einem der vorhergehenden Ansprüche, wobei die zweite elektronische Einheit (10.2) in der Hauptdienstplattform in Verbindung mit mindestens einer zweiten Filterregel registriert (205) wird, um die Daten zu filtern, die an die zweite Hauptdienstplattform (14.2) zu übertragen sind, und wobei die Ereignisdaten, die von der ersten elektronischen Einheit stammen, auf der Grundlage der zweiten Filterregel gefiltert werden, bevor sie an die zweite Hauptdienstplattform bereitgestellt werden.

8. Verfahren nach einem der vorhergehenden Ansprüche, wobei die Sekundärdienstplattform (13) Benutzerinformationen in Verbindung mit dem Konto des Benutzers speichert und wobei bei positiver Identifizierung/Authentifizierung (203) des Benutzers bei der Sekundärdienstplattform die Sekundärdienstplattform die Benutzerinformationen an die erste Hauptdienstplattform überträgt.

9. Computerprogrammprodukt, umfassend Anweisungen für die Umsetzung des Verfahrens nach einem der Ansprüche 1 bis 8, wenn das Programm von einem Prozessor ausgeführt wird.

10. Sekundärdienstplattform zur Registrierung einer ersten elektronischen Einheit (10.1) eines Benutzers, umfassend:
- eine Empfangsschnittstelle (301) zum Empfangen, nach dem Empfang einer ersten Anforderung zur Registrierung bei einer ersten Hauptdienstplattform (14.1), die speziell für die erste elektronische Einheit vorgesehen ist, wobei die erste Anforderung zur Registrierung von einem Benutzerendgerät (1) stammt und eine Benutzerkennung umfasst, die für die Identifizierung/Authentifizierung des Benutzers bei der Sekundärdienstplattform bestimmt ist, einer zweiten Anforderung zur Registrierung von der ersten Dienstplattform, wobei die zweite Anforderung die Benutzerkennung umfasst;
- einen Prozessor (302), der dafür eingerichtet ist, bei positiver Identifizierung/Authentifizierung des Benutzers bei der Sekundärdienstplattform die erste elektronische Einheit in einer Datenbank (304) der Sekundärdienstplattform in Verbindung mit einem Konto des Benutzers zu registrieren, wobei mindestens eine zweite elektronische Einheit, die speziell für eine zweite Hauptdienstplattform vorgesehen ist, zuvor in Verbindung mit dem Konto des Benutzers registriert wurde;
wobei die Empfangsschnittstelle ferner dafür geeignet ist, Ereignisdaten zu empfangen, die von der ersten elektronischen Einheit stammen, und der Prozessor dafür geeignet ist, die Ereignisdaten an die zweite Hauptdienstplattform bereitzustellen.

11. System, umfassend eine Sekundärdienstplattform (13) nach Anspruch 10, eine erste Hauptdienstplattform (14.1) und eine zweite Hauptdienstplattform (14.2).

## Claims

1. Method for registering a first electronic entity (10.1) of a user, the first electronic entity being able to generate event data, the method comprising:
- following the reception (201) of a first request for registration of said first electronic entity by a first main service platform (14.1) dedicated to the first electronic entity, said first registration request being from a user terminal (1) and including a user identifier intended for the identification/authentication of the user by a secondary service platform (13), reception (202) by the secondary service platform from the first main service platform of a second request for registration of said first electronic entity, the second request including the user identifier;
- upon positive identification/authentication (203) of the user by the secondary service platform, registration (204) of the first electronic entity in a database of the secondary service platform, in association with an account of the user, at least one second electronic entity (10.2) dedicated to a second main service platform (14.2) having been registered (205) previously in association with the account of the user;
- upon reception (208) by the secondary service platform, of event data from the first electronic entity, provision (210) of said event data to the second main service platform.

2. Method according to Claim 1, in which the provision (210) of the event data comprises the transmission of said event data to the second main service platform.

3. Method according to Claim 1, in which the provision (210) of the event data comprises the sending to the second main service platform (14.2) of a notification indicating that new event data from the user are accessible on the secondary service platform (13) .

4. Method according to one of the preceding claims, in which, the method further comprises the following step:
- upon reception (202) of the second registration request, the secondary service platform (13) requests the definition of at least one confidentiality rule to be associated with the first electronic entity (10.1), the confidentiality rule being registered in association with the first electronic entity in the secondary service platform;
- on reception (208) of the event data from the first electronic entity, filtering (209) by the secondary service platform of said event data on the basis of the confidentiality rules associated with the first electronic entity, and provision of the filtered event data to the second main service platform (14.2).

5. Method according to one of the preceding claims, in which, upon reception by the secondary service platform (13) of event data from the second electronic entity (10.2), the method further comprises the provision of said event data to the first main service platform (14.1).

6. Method according to Claim 5, in which the method further comprises the following steps:
- upon reception (202) of the second registration request, the secondary service platform (13) requests the definition of a first filtering rule to be associated with the first electronic entity, the first filtering rule being registered in association with the first electronic entity in the secondary service platform; and
- upon reception (208) of the event data from the second electronic entity, filtering (209) by the secondary service platform of said event data on the basis of the first filtering rule associated with the first electronic entity, and provision (210) of the filtered event data to the first main service platform.

7. Method according to one of the preceding claims, in which the second electronic entity (10.2) is registered (205) in the main service platform in association with at least one second filtering rule for filtering the data to be transmitted to the second main service platform (14.2), and in which the event data from the first electronic entity are filtered on the basis of the second filtering rule before being provided to the second main service platform.

8. Method according to one of the preceding claims, in which the secondary service platform (13) stores user information in association with the account of the user and in which, upon positive identification/authentication (203) of the user by the secondary service platform, the secondary service platform transmits the user information to the first main service platform.

9. Computer program product comprising instructions for implementing the method according to one of Claims 1 to 8, when this program is run by a processor.

10. Secondary service platform for registering a first electronic entity (10.1) of a user, comprising:
- a reception interface (301) for receiving, following the reception of a first request for registration by a first main service platform (14.1) dedicated to the first electronic entity, said first registration request being from a user terminal (1) and including a user identifier intended for the identification/authentication of the user by the secondary service platform, a second registration request from the first service platform, the second request including the user identifier;
- a processor (302) configured to, upon positive identification/authentication of the user by the secondary service platform, register the first electronic entity in a database (304) of the secondary service platform, in association with an account of the user, at least one second electronic entity dedicated to a second main service platform having been registered previously in association with the account of the user; in which the reception interface is also capable of receiving event data from the first electronic entity and the processor is capable of providing said event data to the second main service platform.

11. System comprising a secondary service platform (13) according to Claim 10, a first main service platform (14.1) and a second main service platform (14.2) .
